## Europäisches Patentamt
## European Patent Office
## Office européen des brevets

(19)

(11) Veröffentlichungsnummer : **0 071 132**
**B1**

(12)   **EUROPÄISCHE PATENTSCHRIFT**

(45) Veröffentlichungstag der Patentschrift :
**10.09.86**

(21) Anmeldenummer : **82106468.0**

(22) Anmeldetag : **19.07.82**

(51) Int. Cl.⁴ : **G 01 N 27/46**

(54) **Messeinrichtung zur analytischen Bestimmung eines Gaspartialdruckes.**

(30) Priorität : **28.07.81 DE 3129680**

(43) Veröffentlichungstag der Anmeldung :
**09.02.83 Patentblatt 83/06**

(45) Bekanntmachung des Hinweises auf die Patenterteilung : **10.09.86 Patentblatt 86/37**

(84) Benannte Vertragsstaaten :
**BE CH DE FR GB IT LI NL SE**

(56) Entgegenhaltungen :
**EP-A- 0 016 423
US-A- 3 765 842
US-A- 3 975 947
US-A- 4 056 967
US-A- 4 279 142**

(73) Patentinhaber : **BAYER AG
Konzernverwaltung RP Patentabteilung
D-5090 Leverkusen 1 Bayerwerk (DE)**

(72) Erfinder : **Deprez, Jacques
Birkenweg 3
D-5020 Frechen (DE)**
Erfinder : **Drope, Eckard, Dr.
Frankenstrasse 18
D-5000 Köln 40 (DE)**
Erfinder : **Greif, Peter
Hufelandstrasse 94
D-5000 Köln 80 (DE)**
Erfinder : **Soth-Haas, Gabriele
Im Kalkfeld 16
D-5090 Leverkusen 3 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einer Meßeinrichtung zur analytischen Bestimmung eines Gaspartialdruckes mit erweitertem Meßumfang. Sie weist einen elektrochemischen Sensor auf mit einem Hohlraum, durch den das Gas an die Sensoroberfläche diffundiert.

Derartige Sensoren sind z. B. in den Deutschen Offenlegungsschriften 2 436 261 und 2 621 676 beschrieben. Ihnen liegt das Prinzip zugrunde, daß die durch Diffusion in den Hohlraum eintretenden und auf die Sensoroberfläche auftreffenden Moleküle des Meßgases aufgrund einer physikalischen Reaktion an der Sensoroberfläche erfaßt und gezählt werden. Die Reaktion spielt sich dabei an einer Dreiphasengrenze Elektrolyt/Elektrode/Gasraum ab. Aufgrund der Natur des Meßeffektes ist der Meßbereich solcher Sensoren nach oben und unten begrenzt. Die untere Grenze, d. h. die Nachweisgrenze, ist durch das Nullpunktsrauschen vorgegeben. Die obere Grenze ist dadurch gegeben, daß der Abtransport der Meßgasmoleküle an der Dreiphasengrenze, die Nachlieferung der Reaktionspartner oder die Regeneration des Elektrolyten nicht mehr mit dem Antransport der Meßgasmoleküle Schritt hält, so daß Nichtlinearitäten und eine deutliche Verschlechterung des Zeitverhaltens auftreten. Um elektrochemische Sensoren auch für höhere Konzentrationen nutzen zu können, muß der auf die Sensoroberfläche auftreffende Diffusionsstrom begrenzt werden. Zu diesem Zweck werden dem Diffusionsraum geeignete Eintrittsblenden vorgeschaltet (s. EP-A1-0 016 423). Durch die Dimensionierung der Eintrittsblende ist jedoch der Meßbereich ein für alle mal festgelegt. Bei einem Übergang auf einen anderen Konzentrationsbereich muß der Blendenkopf von Hand ausgetauscht werden.

Neuerdings werden Gasanalysengeräte in steigendem Maße auch in der Betriebspraxis für den Arbeitsschutz eingesetzt. Besonders hohe Anforderungen an die Zuverlässigkeit müssen an diese Geräte gestellt werden, wenn es sich um den Nachweis und die Messung von gefährlichen Arbeitsstoffen handelt. Die Meßeinrichtung muß schnell und zuverlässig warnen, wenn gefährliche Konzentrationen in der Luft auftreten. Typisch werden solche Meßeinrichtungen in ortsfesten Anlagen installiert, oder der gefährdeten Person als tragbares Gerät mitgegeben. Die ortsfesten Meßeinrichtungen entnehmen von einem oder mehreren Orten Luftproben, die der analytischen Bestimmung durch Ansaugleitungen oder durch freie Diffusion zugeführt werden. Das Analysengerät ist dann häufig an einem wenig zugänglichen Ort installiert, so daß sich das Betriebspersonal bei der Beurteilung der Situation ganz auf das registrierte Meßsignal am Schreiber verlassen muß. Entsprechendes gilt für Räume, die selten betreten werden. Der Eintretende muß sich in jedem Fall vorher Gewißheit verschaffen können, daß keine schädliche Gaskonzentration vorhanden ist.

Die spezifischen Anforderungen an solche ortsfest aufgestellten Meßeinrichtungen lassen sich daher wie folgt charakterisieren :

1. Schnelle Ansprechzeit, sowohl bei Konzentrationsanstiegen, wie auch bei Konzentrationsabfällen.

2. Keine Beeinträchtigung des Meßverhaltens durch hohe Konzentrationsspitzen des Meßgases.

3. Sichere Erkennung des Betriebs- bzw. Funktionszustandes der Meßeinrichtung, insbesondere bei einem Empfindlichkeitsverlust des Sensors.

4. Geringer Wartungsaufwand, vor allem an entlegenen Probenahmeorten oder entlegenen Analysengeräten.

5. Weitgehende Unmöglichkeit von Manipulierungen durch das Betriebspersonal (Vermeidung von Fehleinstellungen).

Die Forderung an eine hohe Empfindlichkeit und ein günstiges Zeitverhalten läßt sich mit elektrochemischen Sensoren gut erfüllen. Die Schwäche dieser Sensoren liegt aber in ihrer geringen Überlastbarkeit. Hohe Konzentrationen führen häufig zu einer langen Regenerationszeit und als Folge davon zu einem Empfindlichkeitsverlust und verschlechtertem Zeitverhalten. Die Forderung nach einer sicheren Erkennung des Funktionszustandes wird bei modernen Analysengeräten z. T. durch kostspielige und aufwendige Überwachungseinheiten erreicht, die als Zusatzgeräte bereitgestellt werden.

Der Erfindung liegt die Aufgabe zugrunde, eine Gasanalyseneinrichtung mit erweitertem Meßumfang auf der Basis einer elektrochemischen Meßzelle mit vorgegebener Empfindlichkeit und vorgegebenem Zeitverhalten zu schaffen, die ohne Überlastung hohen Gaskonzentrationen ausgesetzt werden kann und deren einwandfreie Funktion ohne aufwendige Zusatzeinrichtungen jederzeit ferngesteuert kontrolliert werden kann.

Diese Aufgabe wird ausgehend von dem eingangs beschriebenen elektrochemischen Sensor erfindungsgemäß dadurch gelöst daß der Hohlraum einen Anschluß mit einer Pumpe zur Einleitung eines meßgasfreien Spülgases aufweist und daß der Sensor mit nachgeschaltetem Meßverstärker zusammen mit der Pumpe als Regelkreis geschaltet ist, der bei einem Schwellwert des Sensor signals die Pumpe einschaltet und bei noch weiter wachsendem Sensorsignal ihre Förderleistung erhöht.

Vorzugsweise wird das Spülgas dadurch bereitgestellt, daß die Pumpe während der Messung saugseitig über ein die Meßkomponente absorbierendes Filter mit der zu untersuchenden Atmosphäre in Verbindung steht. Das in den Hohlraum eingeleitete, Meßkomponentenfreie, Spülgas wirkt dem Diffusionsstrom der Meßkomponente entgegen, so daß die auf die Sensoroberfläche auftreffende Gaskonzentration verringert wird.

Zur Funktionskontrolle des Sensors kann dem Spülgasanschluß eine Prüfgasquelle mit bekannter Konzentration der Meßgaskomponente zugeschaltet werden. Für hohe Gaskonzentrationen läßt sich der Meßwert auf eine Strom- oder Spannungsmessung am Pumpenmotor zurückführen.

Mit der Erfindung wird eine Qualitätssicherung der Meßwerte im Sinne einer verbesserten Zuverlässigkeit erreicht. Einerseits werden durch die Beaufschlagung des Sensors mit Spülgas bei hohen Gaskonzentrationen schädliche Überlastungen vermieden. Andererseits kann durch vorübergehende Zuschaltung der Prüfgasquelle, die eine bekannte Konzentration der Meßkomponente erzeugt, die Funktion des Sensors überprüft werden. Die Prüfung kann entweder manuell (durch Betätigung eines Schalters) oder vollautomatisch in regelmäßigen Zeitabständen durchgeführt werden. Der Meßkopf mit dem Sensor braucht dann nur gewartet zu werden, wenn ein negativer Befund des Funktionstests zur Zentrale gemeldet wird.

Im folgenden wird die Erfindung anhand von Ausführungsbeispielen und Zeichnungen näher erläutert. Es zeigen :

Figur 1 eine Ausführung der erfindungsgemäßen Meßeinrichtung, bei der das Spülgas am Sensor vorbeigeführt wird ;

Figur 2 eine Ausführung, bei der das Spülgas seitlich dem Diffusionshohlraum zugeführt wird ;

Figur 3 ein Blockschaltbild der Meßeinrichtung und

Figur 4 bis 6 verschiedene Diagramme zur Erläuterung der Meßzellenstrom-Charakteristik.

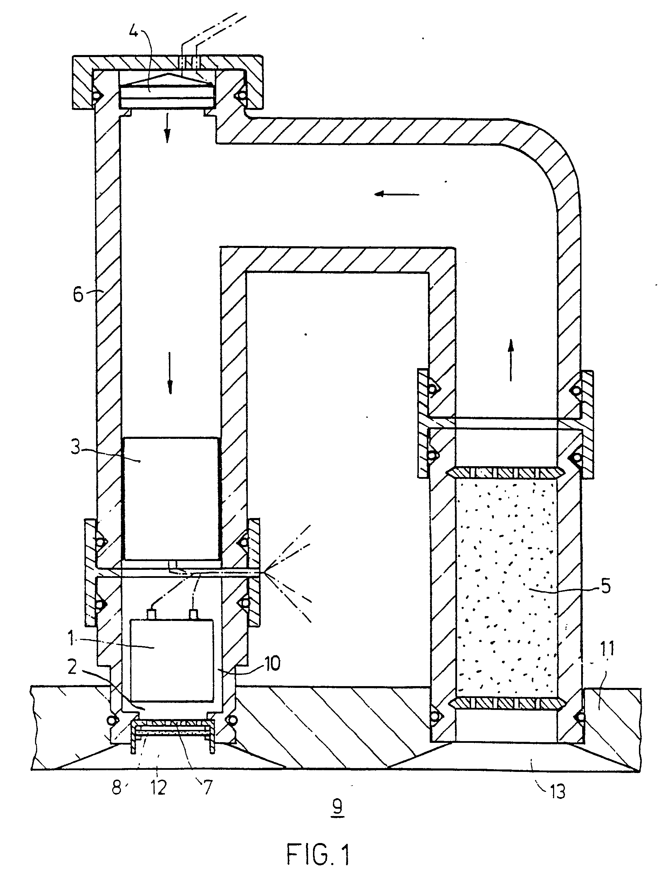

Der in Fig. 1 dargestellte Meßkopf enthält als wesentliche Bestandteile den elektrochemischen Sensor 1 mit vorgeschaltetem Hohlraum 2, einen Ventilator als Pumpe 3, eine Generatorzelle 4 und ein Luftfilter 5. Die Meßzelle 1 ist in einer Rohrleitung 6 angeordnet, die einerseits über eine Blende 7 und ein Staubfilter 8 mit der zu untersuchenden Atmosphäre 9 in Verbindung steht und andererseits über das Luftfilter 5 mit der Atmosphäre verbunden ist. Das zu messende Gas, z. B. Schwefelwasserstoff in Luft, diffundiert durch das Staubfilter 8, die Blende 7 und den angrenzenden Hohlraum an die Sensoroberfläche der Meßzelle 1 und erzeugt ein entsprechendes elektrisches Signal. Geeignete Meßzellen sind z. B. in den deutschen Offenlegungsschriften 2 436 261 und 2 621 676 beschrieben. Als Pumpe 3 kann z. B. ein kleiner Ventilator benutzt werden. Die Generatorzelle 4 dient zur Erzeugung eines Prüfgases mit bekannter Konzentration der Meßkomponente. Sie besteht z. B. aus einer Elektrolysezelle, durch die ein Stromstoß geschickt wird. Auf diese Weise wird kurzzeitig ein Konzentrationsstoß des Prüfgases erzeugt. Eine detaillierte Beschreibung solcher Generatorzellen findet sich in der deutschen Patentschrift 2 621 677.

Die Wirkungsweise des Meßkopfes beruht darauf, daß der Ventilator 3 über die Leitung 6 aus der Atmosphäre 9 Spülgas ansaugt, das durch den Ringkanal 10 zwischen Meßzelle 1 und Rohrleitung 6 und den Hohlraum 2 wieder in die Atmosphäre zurückgefördert wird. Das Granulatfilter 5 sorgt dafür, daß das Spülgas von der Meßkomponente befreit ist. Der Ventilator 3 erzeugt also in dem Diffusionshohlraum 2 einen Gegenstrom, der den Diffusionsstrom der Meßkomponente in definierter Weise schwächt und damit die Empfindlichkeit der Meßeinrichtung vermindert. Durch Einstellung der Ventilatordrehzahl über die angelegte elektrische Spannung kann der Meßbereich in weiten Grenzen verändert und an das jeweilige Meßproblem angepaßt werden.

Zur Durchführung der Sensorfunktionskontrolle braucht nur der Prüfgasgenerator 4 in der oben beschriebenen Weise aktiviert zu werden. Das angesaugte Spülgas wird dann während der Einschaltzeit des Prüfgasgenerators mit der Meßkomponente beaufschlagt. Dadurch entsteht am Sensor 1 ein Signal, das zwischen vorgegebenen Grenzen liegen muß. Anstelle der Generatorzelle 4 könnte natürlich auch ein Reservoir vorgesehen werden, das mit dem Prüfgas gefüllt ist und über ein Ventil kurzzeitig mit der Leitung 6 verbunden wird.

Wie aus Fig. 1 ersichtlich, sind die Bestandteile 1 bis 5 der Meßeinrichtung in einen kompakten Meßkopf intergriert, dessen Grundplatte 11 die Öffnungen für den Eintritt des Meßgases (12) und des Spülgases (13) enthält.

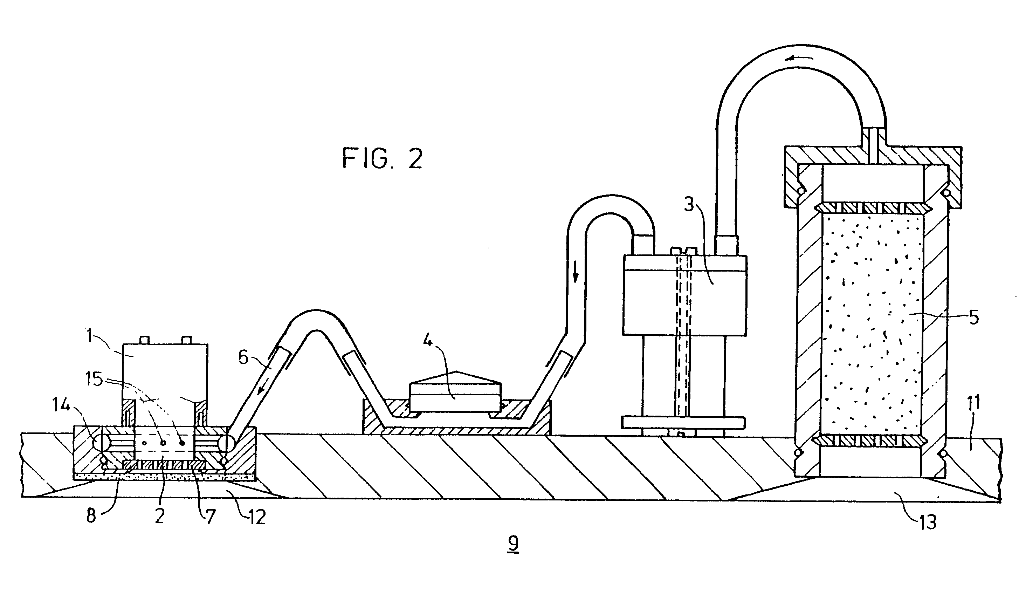

Bei der Anordnung nach Fig. 2 handelt es sich um eine alternative Ausführung der Meßeinrichtung. Der Spülgasanschluß 6 mündet hier seitlich in den Hohlraum 2 vor dem Sensor 1 ein. Der Anschluß ist als Ringrohr 14 mit Bohrungen 15 ausgebildet, durch die das Spülgas in den Hohlraum und von dort durch die Blende 7 und das Staubfilter 8 nach außen strömt. Auf diese Weise wird eine gleichmäßige Verteilung und Mischung der Spülgases mit dem Meßgas im Hohlraum 2 erreicht.

Der Prüfgasgenerator 4 zur Funktionskontrolle des elektrochemischen Sensors 1 ist hier unmittelbar in die Spülgaszuleitung geschaltet. Die Pumpe 3, welche wie bei der Ausführung nach Fig. 1 das Spülgas durch die Eintrittsöffnung 13 über das Absorptionsfilter 5 ansaugt, ist eine handelsübliche Miniaturdrehkolbenpumpe. Sie besitzt gegenüber dem Ventilator bei der Ausführung nach Fig. 1 eine höhere Saugleistung, so daß ein stärkerer Spülgasstrom erzeugt werden kann. Dadurch sind noch höhere Konzentrationen zulässig. Neben dem erweiterten Meßumfang besitzt die Meßeinrichtung gemäß Fig. 2 auch ein günstigeres (schnelleres) Zeitverhalten.

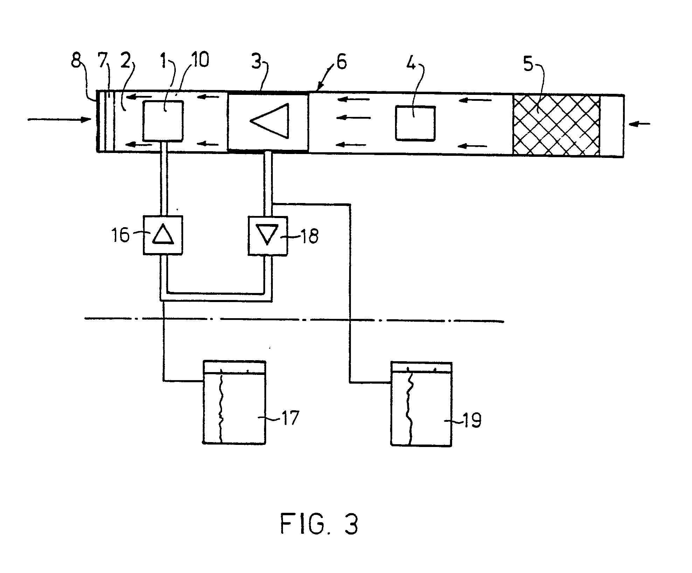

Figur 3 zeigt schematisch die elektronische Signalverarbeitung der Meßeinrichtung. Der elektrochemische Sensor erzeugt unter der Voraussetzung, daß er niederohmig abgeschlossen ist, einen Strom, der proportional zu der auf die Sensoroberfläche auftreffenden Meßgaskonzentration ist. Dieser Strom wird in einem Meßverstärker 16 verstärkt und vom Schreiber 17 registriert. Außerdem wird das verstärkte Meßsignal einem Leistungsverstärker 18 zugeführt, der die Pumpe 3 in der Spülgasleitung 6 speist. Überschreitet das Meßsignal einen einstellbaren Grenzwert (Schwellwertschalter) so wird die Pumpe 3 in Betrieb genommen und erzeugt einen Spülgasstrom der, wie oben beschrieben, dem Meßeffekt entgegenwirkt. Die Drehzahl der Pumpe 3 und damit ihre Förderleistung wächst entsprechend dem zunehmenden Meßsignal. Der Sensor 1 (Meßfühler) bildet also zusammen mit den Verstärkern 16, 18 und der Pumpe 3 (Stellglied) einen Regelkreis. Im Regelbetrieb (Meßsignal größer als Schwellenspannung) kann in vorteilhafter Weise die Pumpenspannung für die Bildung des Meßwertes herangezogen werden. Zu diesem Zweck ist der Schreiber 19 vorgesehen.

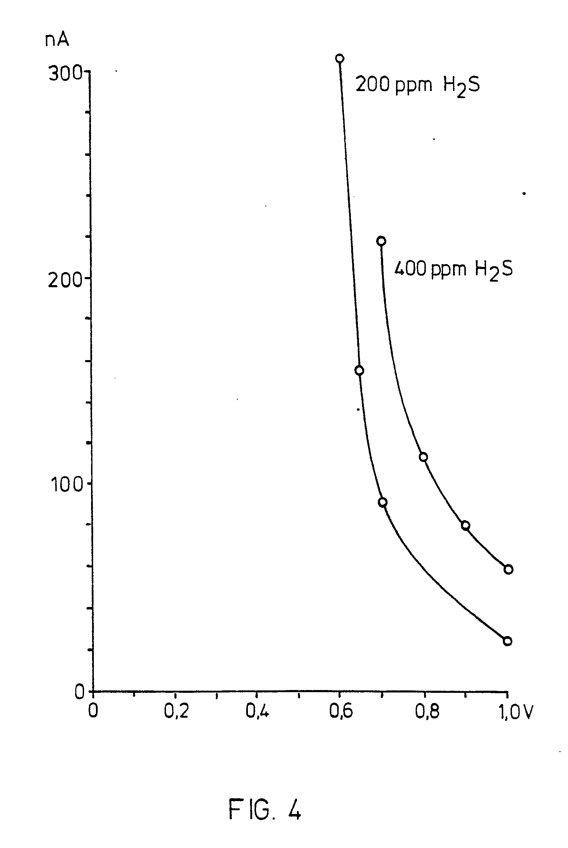

In Fig. 4 ist das Meßsignal (Zellenstrom) als Funktion der Pumpenspannung bei konstanter Begasung (200 und 400 ppm Schwefelwasserstoff) aufgetragen. Die Pumpenspannung wurde dabei extern variiert und nicht wie in Fig. 3 automatisch nachgeregelt. Man erkennt, daß sich der Zellenstrom mit wachsender Pumpenspannung und entsprechend wachsender Drehzahl der Pumpe stark vermindert. Je stärker also der von der Pumpe 3 erzeugte Spülgasstrom, um so stärker wird der auf die Sensoroberfläche auftreffende und für den Meßeffekt maßgebliche Diffusionsstrom der Meßkomponente abgeschwächt. Dadurch wird die Empfindlichkeit der Meßeinrichtung drastisch verringert.

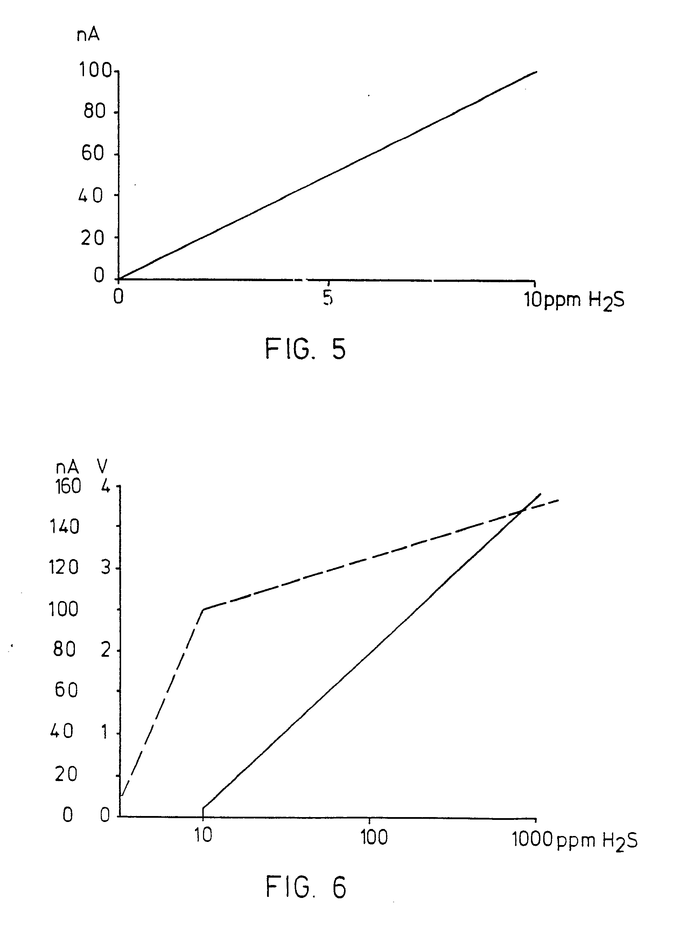

Die Diagramme Fig. 5 und Fig. 6 wurden mit Hilfe der Schaltung gemäß Fig. 3 aufgenommen. Das Meßgas bestand wieder aus Luft mit einem geringen Partialdruck von Schwefelwasserstoff. Untersucht wurde die Abhängigkeit der Meßgröße von der Schwefelwasserstoffkonzentration. Die Fig. 5 zeigt den linearen Anstieg des Zellenstromes im Bereich sehr geringer $H_2S$-Konzentrationen (0 bis 10 ppm). Die Schwellenspannung, bei der die Pumpe 3 zu laufen beginnt und Spülgas erzeugt, liegt bei einigen Zehntel Volt entsprechend einem Zellenstrom von 100 nA. Die dazugehörige $H_2S$-Konzentration beträgt 10 ppm. Bei diesem Wert setzt die Regelung ein. Die Pumpe 3 beginnt zu laufen und bläst Spülgas in den Diffusionshohlraum 2 vor dem Sensor 1. Dieses Verhalten ist in Fig. 6 dargestellt. Als Abszisse ist hier die $H_2S$-Konzentration im logarythmischen Maßstab (10 bis 1 000 ppm) und als Ordinate der Meßzellenstrom und die am Pumpenmotor anliegende Spannung aufgetragen. Die gestrichelte Kurve gibt den Verlauf des Meßzellenstromes und die durchgezogene Kurve den Verlauf der Pumpenspannung wieder. Der erste Anstieg des Meßzellenstromes bis 100 nA entspricht Fig. 5. Bei 10 ppm knickt die Kurve ab. Der Meßzellenstrom steigt dann aufgrund des zunehmend stärker werdenden Spülgasstromes mit wachsender Konzentration nur noch schwach an. Die Pumpenspannung (ausgezogene Kurve) ist dabei ein direktes Maß für die Förderleistung. Umgekehrt kann man auch sagen, daß sich zu jeder vorgegebenen $H_2S$-Konzentration im Bereich von 10 bis 1 000 ppm aufgrund des Regeleffektes ein bestimmter Wert der Pumpenspannung einstellt. Die Pumpenspannung kann also in diesem Bereich als Meßgröße für die Konzentration benutzt werden. Der Schwellwert für den Einsatz der Regelung muß in jedem Fall so niedrig gewählt werden, daß der Sensor im Anfangszustand (0 bis 10 ppm ; s. Fig. 5) noch nicht überlastet wird. Durch Einsatz eines Mikroprozessors im Regelkreis kann elektronisch jede gewünschte Regelkennlinie realisiert werden. Auf diese Weise kann das Regelverhalten der Meßvorrichtung dem Meßproblem jeweils optimal angepaßt werden.

Aus Fig. 5 und 6 wird die Erweiterung des Meßumfanges der Gasanalyseneinrichtung ohne weiteres ersichtlich. Ohne Abschwächung der Meßgaskonzentration durch den Spüleffekt würden die verwendeten elektrochemischen Meßzellen auf der Basis eines Gelelektrolyten im Bereich von 10 bis 100 ppm irreversibel überlastet. Der mit der Spülgasleitung verbundene und wahlweise einschaltbare Prüfgasgenerator erlaubt eine regelmäßige Funktionskontrolle der Meßeinrichtung. Beide Maßnahmen, die Einleitung von Spülgas bei hohen Konzentrationen und der Prüfgasgenerator zur Funktionskontrolle tragen damit zu einer entscheidenden Verbesserung der Zuverlässigkeit bei. Die neue Meßeinrichtung hat sich als Fernmeßkopf in ortsfesten Anlagen zur Raumluftübverwachung bewährt. Eine weitere wichtige Anwendung ist die Lecksuche bei unter Überdruck stehenden gasführenden Rohrleitungen. Zu diesem Zweck muß in die Meßeinrichtung ein für das in der Rohrleitung befindliche Gas spezifischer Sensor eingebaut werden. Bei Lecksuchgeräten wird i. a. eine Detektorkennlinie angestrebt, wie sie in Fig. 6 für den Meßzellenstrom dargestellt ist.

## Patentansprüche

1. Meßeinrichtung zur analytischen Bestimmung eines Gaspartialdruckes mit erweitertem Meßumfang, bestehend aus einem elektrochemischen Sensor (1) zur Erzeugung eines elektrischen Meßsignales mit einem Hohlraum (2), durch den das Meßgas an die Sensoroberfläche diffundiert, dadurch gekennzeichnet, daß der Hohlraum (2) einen Anschluß (6) mit einer Pumpe (3) zur Einleitung eines meßgasfreien Spülgases aufweist und daß der Sensor (1) mit nachgeschaltetem Meßverstärker (16) zusammen mit der Pumpe (3) als Regelkreis geschaltet ist, der bei einem Schwellwert des Sensorsignals die Pumpe einschaltet und bei noch weiter wachsendem Sensorsignal ihre Förderleistung erhöht.

2. Meßeinrichtung nach Anspruch 1, dadurch gekennzeichnet, daß die Pumpe (3) saugseitig über ein das Meßgas absorbierendes Filter (5) mit der zu untersuchenden Atmosphäre (9) in Verbindung steht.

3. Meßeinrichtung nach Anspruch 1 oder 2, dadurch gekennzeichnet, daß dem Spülgasanschluß (6) zur Funktionskontrolle des Sensors (1) eine Prüfgasquelle (4) mit bekannter Konzentration der Meßgaskomponente zuschaltbar ist.

4. Meßeinrichtung nach einem der Ansprüche 1 bis 3, dadurch gekennzeichnet, daß die Meßwertanzeige für die Gaskonzentration auf eine Strom- oder Spannungsmessung am Pumpenmotor zurückgeführt ist.

## Claims

1. Measuring device with an enlarged measuring scope for the analytical determination of a gas partial pressure, consisting of an electrochemical sensor (1), for producing an electrical measuring signal, with a hollow chamber (2) through which the gas to be measured diffuses to the sensor surface, characterised in that the hollow chamber (2) has a connection (6) with a pump (3) for the introduction of a rinsing gas which is free from the gas to be measured and in that the sensor (1) and the downstream measuring amplifier (16) are connected together with the pump (3) in the form of a control loop which switches on the pump at a threshold value of the sensor signal and increases its conveying capacity when the sensor signal rises further.

2. Measuring device according to Claim 1, characterised in that the pump (3) communicates on the suction side with the atmosphere to be examined (9) via a filter (5) which absorbs the gas to be measured.

3. Measuring device according to Claim 1 or 2, characterised in that a test gas source (4) with a known concentration of the gas component to be measured can be connected to the rinsing gas connection (6) for checking the functioning of the sensor (1).

4. Measuring device according to one of Claims 1 to 3, characterised in that the measured value reading for the gas concentration is derived from a current or voltage measurement at the pump motor.

## Revendications

1. Dispositif de mesure pour déterminer analytiquement une pression partielle de gaz, présentant une plage de mesure élargie et constitué d'un capteur électrochimique (1) pour produire un signal électrique de mesure avec une cavité (2) à travers laquelle le gaz à mesurer diffuse à la surface du capteur, caractérisé en ce que la cavité (2) présente un raccord (6) avec une pompe (3) pour introduire un gaz de dilution ne contenant pas le gaz à mesurer ; et en ce que le capteur (1) est monté, avec un amplificateur de mesure (16) monté en aval et avec la pompe (3), pour former un circuit de régulation qui, en présence de valeur de seuil du signal du capteur, met la pompe en circuit et, en présence d'un signal du capteur continuant à croître, accroît le débit de la pompe.

2. Dispositif de mesure selon la revendication 1, caractérisé en ce que la pompe (3) est reliée, côté aspiration, à l'atmosphère à étudier (9) par l'intermédiaire d'un filtre (5) qui absorbe le gaz mesuré.

3. Dispositif de mesure selon la revendication 1 ou la revendication 2, caractérisé en ce qu'au raccord (6) du gaz de dilution, on peut raccorder, pour contrôler le fonctionnement du capteur (1), une source de gaz d'essai (4) contenant une concentration connue des composants des gaz à mesurer.

4. Dispositif de mesure selon l'une des revendications 1 à 3, caractérisé à ce que l'on ramène l'indication de la valeur de mesure de la concentration en gaz à une mesure d'intensité ou de tension du moteur de la pompe.

FIG. 1

FIG. 2

FIG. 3

FIG. 4

4

FIG. 5

FIG. 6